(19) **Europäisches Patentamt**
**European Patent Office**
**Office européen des brevets**

(11) **EP 1 848 536 B1**

(12) **EUROPEAN PATENT SPECIFICATION**

(45) Date of publication and mention
of the grant of the patent:
**16.05.2012 Bulletin 2012/20**

(51) Int Cl.:
*B02C 4/02* *(2006.01)*          *B01J 20/22* *(2006.01)*
*A61L 15/28* *(2006.01)*          *C08J 3/12* *(2006.01)*

(21) Application number: **06704377.8**

(22) Date of filing: **13.01.2006**

(86) International application number:
**PCT/CA2006/000048**

(87) International publication number:
**WO 2006/074556 (20.07.2006 Gazette 2006/29)**

(54) **PROCESS FOR PARTICLE SIZE REDUCTION OF GLASS-LIKE POLYSACCHARIDES**

VERFAHREN ZUR REDUZIERUNG DER TEILCHENGRÖSSE VON GLASARTIGEN POLYSACCHARIDEN

PROCEDE PERMETTANT DE REDUIRE LA TAILLE DE PARTICULE DE POLYSACCHARIDES DE TYPE VITREUX

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.01.2005 CA 2492884**

(43) Date of publication of application:
**31.10.2007 Bulletin 2007/44**

(73) Proprietor: **Archer-Daniels-Midland Company Decatur, IL 62526 (US)**

(72) Inventor: **CHEVIGNY, Stéphane Varennes, Québec J3X 1L4 (CA)**

(74) Representative: **Lahrtz, Fritz Isenbruck Bösl Hörschler LLP Patentanwälte Prinzregentenstrasse 68 81675 München (DE)**

(56) References cited:
**WO-A-2004/085481          US-A- 453 364
US-A- 4 232 047          US-A- 5 165 608
US-A1- 2002 156 048**

**Description**

**FIELD OF THE INVENTION**

The present invention relates to a process for reducing the particle size of glass-like polysaccharides.

**BACKGROUND OF THE INVENTION**

Glass-like polysaccharides are a special class of physically modified polysaccharides. Unlike their native, crystalline counterpart, glass-like polysaccharides are amorphous and have glass-like characteristics. Glass-like polysaccharides do not possess an organized crystalline pattern, making them more suitable as absorbent materials. Glass-like polysaccharides have found use in a variety of applications.

Glass-like polysaccharides have been described as being useful in a variety of food related applications. More specifically, they have been used to encapsulate organoleptic additives (Carrell, P. K. US P 3,706,598; Spratt et al. CA 1,319,045; Sair et al. US P 4,232,047; Galluzzi et al. US P 3,922,354; Saleeb et al. US P 5,972,395, US P 4,820,534, US P 4,532,145; Levine et al. US P 5,009,900; Fulger et al. US P 5,958,502; Franke et al. US P 5,846,580; Willibald-Ettle et al. US P 6,582,753, US P 6,248,386).

Glass-like polysaccharides may sometimes comprise occluded moisture. This occluded moisture has an effect on the hardness and the brittleness of the glass-like polysaccharides, rendering them less abrasive and making them very suitable as gentle abrasive grits (Lane *et al.* US P 5,066,335, US P 5,360,903, US P US 5,367,068; Koutlakis et al, US P 6,159,257, US App. 2004/157532; Drake et al. US P 6,726,536, US App. 2004/121,707).

Glass-like polysaccharides have also been described as water absorbent materials (Huppé et al. CA 2,308,537; Thibodeau et al. CA 2,462,053; Berrada et al. CA 2,483,049; Drake et al. US App. 2004/244,652).

In the above-cited applications, the glass-like polysaccharides are ground to obtain a particulate form. Several useful techniques for particle size reduction have been described by Richard et al. (Perry's Chemical Engineers' Handbook, 7th ed., Perry et al., 1997, McGraw-Hill, s. 20, p. 1-56). Moreover, Richard *et al.* classified crushing and grinding equipment in 11 classes: Jaw crushers, Gyratory crushers, Heavy-duty impact mills, Roll mills, Dry pans and chaser mills, Shredders, Rotary cutters and dicers, Media mills, Medium peripheral-speed mills, High peripheral-speed mills and Fluid-energy superfine mills.

The use of heavy-duty impact mills and among them hammer mills, for grinding glass-like polysaccharides for abrasive grits or absorbent materials, has been previously described. However, the use of such heavy-duty impact mills generally results in a very broad particle size distribution having a high content in fine and large particles. Large particles generally exceed the average particle size of the glass-like polysaccharide by more than 350 $\mu$m. Fine particles generally have a particle size about 350 $\mu$m less than the average particle size of the glass-like polysaccharide. For applications in the absorbent industry, the desired average particle size is about 500 $\mu$m. Hence, within the context of the absorbent industry, large particles are defined as being in excess of about 850 $\mu$m and fine particles are defined as being less than 150 $\mu$m.

Fine particles are generally unwanted, causing dusting and particle size migration problems. Moreover, a narrow particle size distribution is often preferred for some applications, such as water absorption. Fine particles are known to create gel blocking problems, as reported by Berg et al. (US P 5,300,565). Moreover, fine particles tend to adhere to movable parts of various industrial process equipments, especially greased parts. Such adhesion will create a crust which may eventually lead to equipment damage. Additionally, fine particles are also more prone to generate airborne dusts which may become a serious occupational health concern. Finally, airborne dusts, especially in the case of polysaccharides or grains, could cause explosions and fires.

Larger particles are generally not suitable in applications comprising thin hygiene products such as sanitary napkins or airlaids. Moreover, larger particles will tend to only slowly absorb fluids such as water and will cause pinholes in hygiene products.

To solve the problems inherent to fine or large particles, the ground glass-like polysaccharides could be sieved. However, the sieving operation will lead to lost product fractions that will need to be discarded. Moreover, the sieving of glass-like polysaccharide fine particles is a difficult operation at best, in view of their very irregular geometry. This irregular geometry often results in clogging of the sieves, especially by the fine particles.

The use of roller mills for reducing the particle size of glass-like polysaccharides is also known in the art. Roller mills compress the glass-like polysaccharide particles, leading to a "stress" build-up, which will results in the bursting of the particles between rollers. This type of size reduction is very aggressive. In order to reduce the aggressiveness of the process and thus the fine particle content, the use of multiple pairs of successive rollers has been described for the grinding of cereal based products or foods (Taylor, T. US P 453,364; Brunner, H. FR 415230, Johnston, G. US P 1,396,712; Noll et al. US P 2,986,348; Huessy, E. G. US P 3,895,121; Sartori, R. FR 1,296,235; Livrieri, F. EP 0949003; Standing, C. N. US P 3,933,086; Boczewski, M. P. US P 4,220,287; Rusch et al. US P 4,225,093; Bielskis et al. US P 4,859,484; Gemsjager, H. US P 5,031,845; Baltensperger et al. WO 89/03245 A1; Wellman, W. US P 5,089,282, US P 5,104,671, US P 5,141,764, US P 5,186,968, US P 5,194,287, US P 5,211,982; Salem et al. US P 6,098,905; Curran, S. P. US P 5,192,028; Leusner et al. US P 6,887,509; Giguere, R. J. US P 5,250,313; Hellweg et al. US App. 2005/153,044; Morgan, K. R. WO 05/002343; and Weaver, W. R. US App. 2005/160,996).

The use of roll mills for grinding glass-like polysaccharides has been described by Sair et al. (US P 4,232,047). However, Sair *et al.* describe the use of only one pair of rollers, which, as mentioned before, is a very aggressive treatment. Moreover, Sair *et al.* are silent with respect to the moisture content of the glass-like polysaccharides, which plays a critical role for a highly effective size reduction treatment. The moisture content is also a critical feature of absorbent glass-like polysaccharides, as moisture will have a direct impact on the absorbent properties. It is well known in the relevant art that products having high moisture contents will show reduced absorbency.

There thus remains a need for a process for the efficient particle size reduction of glass-like polysaccharides.

The present invention seeks to meet these and other needs.

## SUMMARY OF THE INVENTION

The present invention relates to a novel process for reducing the particle size of glass-like polysaccharides. The present invention also describes particulate materials obtained by such a process, as well as to compositions comprising such particulate materials. More specifically, the present invention relates to a process for reducing the particle size of glass-like polysaccharides, producing less fine and/or large particles (*i.e.* narrower particle size distribution). The process of the present invention can be conveniently employed for reducing the particle size of glass-like polysaccharides for use in the absorbent industry. The process of the present invention offers the additional advantages of being both cost and energy efficient.

In an embodiment, the present invention relates to a process for reducing the particle size of glass-like polysaccharides selected from the group consisting of glass-like polysaccharides having a moisture content ranging from 0% to 13% and glass-like polysaccharides being in a glassy state. The process comprises successively submitting the glass-like polysaccharide to the particle size reducing action of at least three pairs of successive rollers.

In an embodiment, the present invention relates to a process for reducing the particle size of glass-like polysaccharides selected from the group consisting of glass-like polysaccharides having a moisture content ranging from 0% to 13% and glass-like polysaccharides being in a glassy state, wherein the glass-like polysaccharides comprise starch. The process comprises successively submitting the glass-like polysaccharide to the particle size reducing action of at least three pairs of successive rollers.

The present invention further describes absorbent compositions comprising particles of reduced size of glass-like polysaccharides selected from the group consisting of glass-like polysaccharides having a moisture content ranging from 0% to 13% and glass-like polysaccharides being in a glassy state.

Other objects, features and advantages of the present invention will become apparent from the following detailed description. It should be understood, however, that the detailed description and the specific examples, while indicating illustrative embodiments of the invention, are given by way of illustration only.

## BRIEF DESCRIPTION OF THE DRAWINGS

Having thus generally described the invention, reference will now be made to the accompanying drawings, showing by way of illustration a preferred embodiment thereof, and in which:

FIG. 1: FIG. 1 illustrates a side elevational view of three successive pairs of rollers, according to an embodiment of the present invention.

FIG. 2: FIG. 2 shows a scanning electron micrograph of a glass-like polysaccharide, according to an embodiment of the present invention.

FIG. 3: FIG. 3 illustrates a side elevational view of a roller tooth having a "wave" shape, according to an embodiment of the present invention.

FIG. 4: FIG. 4 illustrates a perspective view of a roller according to an embodiment of the present invention.

## DETAILED DESCRIPTION OF ILLUSTRATIVE EMBODIMENTS

In order to provide a clear and consistent understanding of the terms used in the present specification, a number of definitions are provided below. Moreover, the present description refers to a number of routinely used chemical and technical terms; definitions of selected terms are provided for clarity and consistency.

The use of the word "a" or "an" when used in conjunction with the term "comprising" in the claims and/or the specification may mean "one", but it is also consistent with the meaning of "one or more", "at least one", and "one or more than one". Similarly, the word "another" may mean at least a second or more.

As used in this specification and claim(s), the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or open-ended and do not exclude additional, unrecited elements or method steps.

The term "about" is used to indicate that a value includes an inherent variation of error for the device or the method being employed to determine the value.

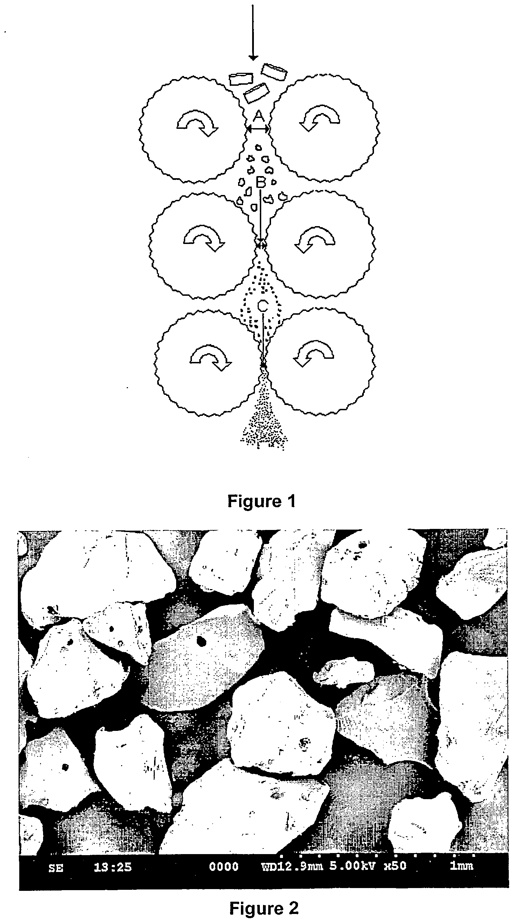

As used herein, the term "glass-like polysaccharide" refers to a polysaccharide which is substantially a uniform amorphous solid. Glass-like polysaccharides are commonly prepared by the rapid cooling of molten polysaccharides. Rapid cooling reduces the polysaccharide's mobility, preventing the polysaccharide chains from packing into a more thermodynamically favorable crystalline state. Glass-like polysaccharides are often designated as "self-entangled" polysaccharides, such as reported by Thibodeau et al. (CA 2,462,053) or Berrada et al. (CA 2,483,049). Moreover, glass-like polysaccharides are characterized as having a broken glass-like shape. A non-limiting example of such a glass-like shape is illustrated in Figure 2. It should be understood that the definition of glass-like polysaccharides comprises agglomerates, (*i.e.* inorganic-polysaccharide agglomerates) and polysaccharide nanocomposites (Berrada et al. CA 2,483,049), all of which comprise a glass-like polysaccharide component of at least 50%.

As used herein, the term "glassy state" refers to a substate of matter of glassy materials, particularly polymeric materials. In a glassy state, the polysaccharide chains are relatively strongly associated with each other, without however having a crystalline pattern. When in a glassy state, the polysaccharides are more brittle and harder.

As used herein, the term "rubbery state" refers to a substate of matter of glassy materials, particularly polymeric materials. In a rubbery state, the electrostatic interaction (non-limiting examples of which include H-bonding and ionic bonding) between the polysaccharide chains are weaker, allowing for more mobility of the polymeric chains. This additional freedom of motion makes "rubbery" glass-like polysaccharides more resilient to stress or more ductile under an applied pressure.

As used herein, the term "molten polysaccharides" refers to polysaccharides for which a sufficient amount of heat and water has been provided to rupture their crystalline pattern. A synonymous term, i.e. "gelatinised", is often used when referring to starch.

As used herein, the term "polysaccharide" refers to polymers having a backbone comprising monosaccharide repeating units and/or derivatized monosaccharide repeating units, wherein such repeating units make-up at least 90% of the polymers. Non-limiting examples include starches, modified starches, amylopectin, modified amylopectin, amylose, modified amylose, chitosan, chitin, guar gum, modified guar gum, locust bean gum, tara gum, konjac gum, konjac flour, fenugreek gum, mesquite gum, aloe mannans, cellulose, modified cellulose (representative examples include carboxyalkylated cellulose and carboxymethyl cellulose), oxidized polysaccharides, sulfated polysaccharides, cationic polysaccharides (representative examples include chitosan, quaternary ammonium derivatives of polysaccharides and guanidinated polysaccharides such as described by Berrada, M. CA 2,519,417), pectin, arabic gum, karaya gum, xanthan, kappa, iota or lambda carrageenans, agar-agar, alginates and mixtures thereof.

As used herein, the term "monosaccharide unit" refers to cyclic $C_5$-$C_6$ aldoses or ketoses. Non limiting examples of $C_5$-$C_6$ aldoses include allose, altrose, glucose, mannose, gulose, idose, galactose, talose, ribose, arabinose, xylose, and lyxose. Non limiting examples of $C_5$-$C_6$ ketoses include ribulose, xylulose, fructose, sorbose and tagatose.

As used herein, the term "monosaccharide derivatives" refers to any chemically or enzymatically modified monosaccharide unit.

As used herein, the term "moisture content" refers to the amount of water (% w/w) contained in a solid.

As used herein, the term "ambient temperature" refers to temperatures ranging from 15 to 40°C.

As used herein, the term "roller" refers to cylinders rotating along their longitudinal axis.

As used herein, the term "pair of rollers" refers to 2 counter rotating, substantially parallel rollers, positioned in close proximity to each other.

As used herein, the term "gap nip" refers to the spacing between a pair of rollers. In order to be effective, the gap nip should be smaller than the particles to be reduced in size.

As used herein, the term "gap nip aggressiveness" refers to the gap nip ratio between two pairs of successive rollers. The "gap nip aggressiveness" can be defined by the following equation:

$$\frac{Gap\,nip_1}{Gap\,nip_2} = aggressiveness\,ratio$$

As illustrated by the drawing in Figure 1, a first "gap nip aggressiveness ratio" is obtained by dividing "gap nip A" by "gap nip B". A second "gap nip aggressiveness ratio" is obtained by dividing "gap nip B" by "gap nip C". Higher aggressiveness ratios (*i.e.* higher numerical values) are indicative of more particles of glass-like polysaccharides being stressed. However, if the exerted stress is excessive (*i.e.* an aggressiveness ratio of 2 or more), an excessive bursting of the particles will occur, generating a larger content of fine particles.

As used herein, the term "successive pairs of rollers" refers to a series of pairs of rollers, each pair having a reducing impact on the size of the glass-like polysaccharide particles. A series of three successive pairs of rollers is illustrated in Figure 1.

As used herein, the term "Fine" or "Fine particle" refers to small particles. The size of fine particles can be calculated by subtracting 350 $\mu$m from the desired average particle size. For applications in the absorbent industry, a desired average particle size is about 500 $\mu$m; the fine would thus have a particle size of 150 $\mu$m or less.

As used herein, the term "Large" or "Large particle" refers to big particles. The size of large particles can be calculated by adding 350 $\mu$m to the desired average particle. For applications in the absorbent industry, a desired average particle size is about 500 $\mu$m; the large particles would thus have a particle size of 850 $\mu$m or more.

As used herein, the term "Free Swell Capacity" (FSC), also called "Total Absorption", refers to the amount (g) of fluid absorbed per gram of the composition. Typical fluids are saline solutions (0.9% Weight/Weight NaCl solution, hereinafter called 0.9% NaCl solution or saline).

As used herein, the term "Centrifuge Retention Capacity" (CRC) also called "Retention", refers to the amount (g) of fluid retained per gram of the composition, following exposure of the composition to a centrifugation force of 250G. Typical fluids are saline solutions (0.9% Weight/Weight NaCl solution, hereinafter called 0.9% NaCl solution or saline).

In a broad sense, the present invention relates to a novel process for reducing the particle size of glass-like polysaccharides. In an embodiment of the present invention, the particle size of the glass-like polysaccharides is reduced by the action of at least three pairs of successive rollers. In a further embodiment of the present invention, the glass-like polysaccharides have a moisture content ranging from 0% to 13%. In a further embodiment of the present invention, the glass-like polysaccharides are in a glassy state.

Following the reduction process, reduced glass-like polysaccharide particles are obtained. The reduction process minimizes the formation of fine and/or large particles. In an embodiment of the present invention, the process for reducing the particle size of glass-like polysaccharides generates particles exhibiting a narrow particle size distribution. In a further embodiment, the reduction process of the present invention generates reduced particles having a fine particle content of less than 5% and a large particle content of less than 5%. In yet a further embodiment, the reduction process of the present invention generates reduced particles having a fine particle content of less than 2% and a large particle content of less than 2%.

Glass-like polysaccharides, due to their physical characteristics, constitute a special class of polysaccharides. Glass-like polysaccharides can be in a glassy state or in a rubbery state. It was unexpectedly discovered that when at ambient temperature and depending on the moisture content, glass-like polysaccharides will fracture according to different mechanisms.

Rubbery glass-like polysaccharides are glass-like polysaccharides having high moisture contents and tend to have plastic-like and rubber-like characteristics. Such glass-like polysaccharides will be more prone to deform under an applied pressure and will rather fracture than burst. Moreover, the high moisture content inherent to these rubbery glass-like polysaccharides imparts elasticity and ductility to the particles, making their reduction using roller mills substantially ineffective. Elasticity and ductility allow for the polysaccharide to absorb energy when submitted to the action of rollers. More energy will thus be required to properly fracture the particles. The energy absorption will rapidly increase the temperature of the polysaccharide which will tend to stick to industrial equipment. Moreover, high temperature polysaccharide dusts are flammable.

Glass-like polysaccharides in a glassy state are characterized by lower moisture contents and tend to be more brittle and harder. Such glass-like polysaccharides will burst rather than fracture under an applied stress such as shear and pressure, making them very suitable for size reduction using roller mills. In an embodiment of the present invention, such glass-like polysaccharides have a moisture content ranging from 0% to 13%. In a further embodiment of the present invention, such glass-like polysaccharides have a moisture content ranging from 7% to 9%.

It is within the capacity of a skilled technician that lowering the temperature of glass-like materials will slow the mobility of the individual polymeric chains making up the glass-like materials. This will make the material glassier, rendering it more prone to the action of roller mills. Higher temperatures, however, will soften the glass-like materials rendering them less suitable for use in roller mills.

In a roller mill, a pair of counter rotating rollers is spaced-apart defining a space called "gap nip". This spacing is preferably adjustable in order to control the stress applied on the particles to be reduced. As can be observed from Figure 1, the particles to be reduced are successively conveyed into the gap nip spacing A, B and C, in which they are stressed by the pressure exerted by the rollers. To be effective, the gap nip must be smaller than the size of the particles to be reduced. Depending on the roller mill configuration, several pairs of successive rollers may be present.

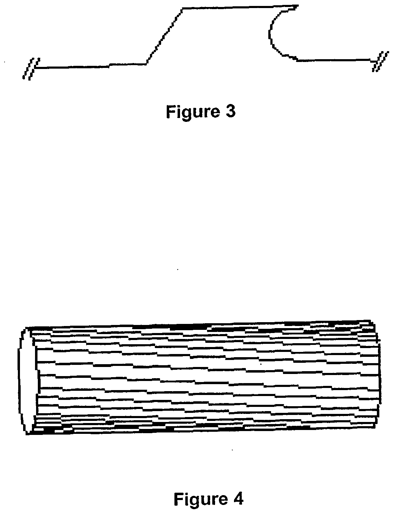

In an embodiment of the present invention, the pair of rollers is counter rotating at different speeds. This will result in the particles being exposed to shear stresses, resulting in an efficient size reduction. In an embodiment, the rollers are equipped with corrugated teeth, located along the outer surface of the rollers. The teeth will secure the particles entering the gap nip and will impact the particles therein. In an embodiment of the present invention, and as illustrated in Figure 3, the teeth have a wave-like shape. The concave side of the wave should point at the glass-like polysaccharide particles to be reduced, providing for the particles to be guided into the gap nip. In a further embodiment of the present invention, the corrugated teeth are linear, spanning the length of the roller, either substantially parallel to the axis of the roller or offset there from.

An adequate adjustment of the gap nip(s) is important if an efficient particle size reduction is to be achieved. Indeed, the successive gap nips should be progressively reduced. An excessive gap nip difference between two successive pairs of rollers results in an excessively high aggressiveness ratio. Such a high ratio will result in excessive bursting of the glass-like polysaccharide particles, generating unwanted amounts of fine particles. In an embodiment of the present invention, the gap nip aggressiveness ratio ranges from 1.0 to 2.0. In a further embodiment, the gap nip aggressiveness ratio ranges from 1.2 to 1.8.

In an embodiment of the present invention, the glass-like polysaccharide particles are subjected to the reducing action of at least three pairs of successive rollers. The use of an increased number of successive rollers, allows for the aggressiveness ratio between two successive pairs of rollers to be more gradually reduced. However, it is within the capacity of a skilled technician to determine the number of successive pairs of rollers to be used, as well as determining adequate gap nip settings, in order obtain a desired particle size distribution.

The reduced glass-like polysaccharide particles of the present invention exhibit a narrow particle size distribution. However, sieves may still be used to further narrow the particle size distribution. Moreover, a dust cleaner may be used in proximity to the rollers in order to remove any airborne particles. The use of such dust cleaners further narrows the particle size distribution.

The glass-like polysaccharides to be used in the process of the present invention may be obtained from a variety of sources. Non-limiting examples include starches, modified starches, amylopectin, modified amylopectin, amylose, modified amylose, chitosan, chitin, guar gum, modified guar gum, locust bean gum, tara gum, konjac gum, konjac flour, fenugreek gum, mesquite gum, aloe mannans, cellulose, modified cellulose (representative examples include carboxyalkylated cellulose and carboxymethyl cellulose), oxidized polysaccharides, sulfated polysaccharides, cationic polysaccharides, pectin, arabic gum, karaya gum, xanthan, kappa, iota or lambda carrageenans, agar-agar and alginates. Non-limiting examples of mannose-based polysaccharides include guar gum, tara gum, locust bean gum, konjac gum, mesquite gum, and fenugreek extracts. Further non-limiting examples include cross-linked polysaccharides such as those described by Couture et al. (CA 2,362,006); mixtures of polysaccharides such as those described by Bergeron, D. (CA 2,426,478); chemically derivatized polysaccharides such as those described by Berrada, M. (CA 2,519,417); and polysaccharides-inorganic agglomerates, and polysaccharides nanocomposites such as those described by Berrada et al. CA 2,483,049.

In an embodiment of the present invention, the glass-like polysaccharide is starch. Non-limiting example of starches include corn, waxy corn, wheat, waxy wheat, rice, waxy rice, potato, cassava, waxy maize, sorghum, waxy sorghum, sago, buckwheat, beans, peas, rye, barley, and amaranth.

Glass-like polysaccharides are usually obtained through extrusion processes. The glass-like extrudates are usually cut into pellets, such as those described in US P 5,066,335 (Lane et al.). In an embodiment of the present invention, the diameter of the pellets ranges from 2 mm to 8 mm.

The reduced glass-like polysaccharide particles of the present invention can be employed in a variety of applications such as in disposable sanitary products (*i.e.* diapers, incontinence articles, feminine hygiene products, and absorbent dressings), airlaids, household articles, sealing materials, humectants (*i.e.* agricultural products for soil conditioning), mining and oil drilling, anti-condensation coatings, water-storing materials (agriculture/horticulture/forestry), absorbent paper products, surgical absorbents, pet litter, bandages, wound dressings, chemical absorbents, polymeric gels for cosmetics and pharmaceuticals, artificial snow, in fire-fighting techniques, and in applications related to the transportation of fresh food or seafood, as well as in food packaging applications. Moreover, the reduced glass-like polysaccharide particles of the present invention can be employed to absorb a variety of liquids, non-limiting examples of which include physiological fluids, saline solutions, water and aqueous solutions.

The reduced glass-like polysaccharide particles of the present invention can be mixed with other co-absorbent materials. In an embodiment of the present invention, the compositions comprise from 1 to 99% (w/w) of reduced size glass-like polysaccharides, and from 99 to 1% (w/w) of co-absorbent material. Non-limiting examples of co-absorbent materials include synthetic superabsorbent polymers, mannose-based polysaccharides, ionic polysaccharides, fibers and mixtures thereof.

In an embodiment of the present invention, absorbent compositions are prepared by mixing the reduced size glass-like polysaccharide particles with ionic polysaccharides, either cationic or anionic polysaccharides, or mixtures thereof. In a further embodiment, absorbent compositions are prepared by mixing the reduced size glass-like polysaccharide particles with one or more anionic polysaccharides.

Non-limiting examples of anionic polysaccharides include carboxyalkyl polysaccharides, carboxymethyl cellulose, carboxymethyl starch, oxidized polysaccharides, xanthan, carrageenans, pectin and mixtures thereof.

Non-limiting examples of fibers include cellulose, viscose, rayon, cellulose acetate, Nylon™, polyalkylenes, polyethylene, polypropylene, bi-component fibers, polyesters, polylactides, polypropanediols, Lyocell™, sphagnum and mixtures thereof.

Non-limiting examples of mannose based polysaccharides include guar, tara, locust bean, konjac, fenugreek extracts, mesquite extracts, aloe mannans and mixtures thereof.

The co-absorbent synthetic superabsorbent polymers can generally be obtained via the polymerization of monomers, non-limiting examples of which include acrylic acid, acrylate salts, acrylic ester, acrylic anhydride, methacrylic acid, methacrylate salts, methacrylic esters, methacrylic anhydride, maleic anhydride, maleic salts, maleate esters, acrylamide, acrylonitrile, vinyl alcohol, vinyl pyrrolidone, vinyl acetate, vinyl guanidine, aspartic acid, aspartic salts and mixtures thereof.

## EXPERIMENTAL

### Materials

Glass-like grade A wheat starch pellets having a diameter ranging from about 2 mm to about 8 mm and having a moisture content of 10 %, were obtained from Archer Daniels Midland®, (Decatur, USA, Division Candiac, Canada). Glass-like corn starch pellets having a diameter ranging from about 2 mm to about 8 mm and having a moisture content of 8 %, were obtained from Groupe Lysac Inc. ® (Boucherville, Canada).

### Triple pair roller mill

The glass-like polysaccharide particles were reduced using a Gran-U-Lizer™ 1052 TP grinder from Modern Processing Equipment (Chicago, USA). The grinder was equipped with three (3) pairs of rollers. The rollers, made from centrifugally cast dual metal chilled iron, had a diameter of 10 inches and were 52 inches in length. Moreover, the rollers were corrugated with wave-like teeth. The rollers were pneumatically controlled, permitting a variable gap nip adjustment. All pairs of rollers were asynchronous, *i.e.* rotating at a different pace. The first pair of rollers rotated at speeds of 478 rpm and 1160 rpm respectively. The second pair of rollers rotated at speeds of 512 rpm and 1160 rpm respectively. The third pair of rollers rotated at speeds of 614 rpm and 1160 rpm respectively. A 25 HP motor powered each pair of rollers. The grinder was fed using a 1052 PF roller feeder (1 HP), with variable motor speed drive, from Modern Processing Equipment (Chicago, USA).

### Siever

Samples were sieved for a period of about 10 minutes using a Tyler Ro-Tap™ test sieve shaker rotating at 1725 rpm. Samples were sieved with sieves having openings of 20, 30, 60 and 100 Tyler mesh.

### Test methods

As discussed in Modern Superabsorbent Polymer Technology (Buchholz, F.L. and Graham, A.T. Eds., Wiley-VCH, New York, 1998, section 4.6.1. Swelling Capacity: Theory and Practice, p. 147), several measurement methods are used in order to characterize the swelling capacity of a polymer. In the field of superabsorbents, the Gravimetric Swelling Capacity [also called the Free Swell Capacity (FSC)] and the Centrifuge Capacity [also called the Centrifuge Retention Capacity (CRC)] are recommended methods. The FSC and the CRC were used to compare the swelling capacities of the obtained absorbent products.

### Tea bags for FSC and CRC measurements

Tea bags (10 X 10 cm) were made from heat sealable Ahlstrom™ filter paper (16.5 $\pm$0.5 g/m$^2$).

### FSC measurements

The Free Swell Capacity (FSC) in a 0.9% NaCl solution was determined according to the recommended test method 440.2-02 from EDANA.

## CRC measurements

The Centrifuge Retention Capacity (CRC) in a 0.9% NaCl solution was determined according to the recommended test method 441.2-02 from EDANA.

## EXAMPLES

### Example 1: Wheat starch

The gap nip for the first pair of rollers was adjusted to 0.018 inches (457 $\mu$m); the gap nip for the second pair of rollers was adjusted to 0.010 inches (254 $\mu$m); and the gap nip for the third pair of rollers was adjusted to 0.006 inches (152 $\mu$m). The aggressiveness ratio as calculated for the first pair of rollers and the second pair of rollers was 1.80; the aggressiveness ratio as calculated for the second pair of rollers and the third pair of rollers was 1.67.

Glass-like wheat starch pellets were fed into the mill.

Once ground, the reduced glass-like wheat starch particles were sieved for a period of 10 minutes. The obtained particle size distribution is illustrated hereinbelow in Table 1.

### Table 1: Particle size distribution of Example 1

| Mesh size | Micron size | Percentage (w/w) |
|-----------|-------------|------------------|
| > 20 | > 833 $\mu$m | 4.1 % |
| 30 | 589 $\mu$m | 26.7 % |
| 60 | 246 $\mu$m | 65.5 % |
| 100 | 147 $\mu$m | 2.7 % |
| < 100 | < 147 $\mu$m | 0.8% |

### Examples 2-5: Effect of gap nip on particle size distribution

The gap nip was modified as illustrated hereinbelow in Table 2. Glass-like wheat starch pellets were fed into the mill.

Once ground, the reduced glass-like wheat starch particles were sieved for a period of 10 minutes. The obtained particle size distribution is illustrated hereinbelow in Table 3.

### Table 2: Gap nip settings

| Example n° | Gap nip 1 | Gap nip 2 | Gap nip 3 |
|------------|-----------|-----------|-----------|
| 2 | 0.024 in.* | 0.014 in. | 0.010 in. |
| 3 | 0.022 in. | 0.012 in. | 0.008 in. |
| 4 | 0.014 in. | 0.008 in. | 0.005 in. |
| 5 | 0.014 in. | 0.008 in. | 0.004 in. |
| *1 in. = 25,400 $\mu$m | | | |

### Table 3: Particle size distribution of Examples 2-5

| Mesh/Micron size | Example 2 | Example 3 | Example 4 | Example 5 |
|------------------|-----------|-----------|-----------|-----------|
| > 20 Mesh / > 833 $\mu$m | 11.6% | 7.2% | 1.7 % | 2.1 % |
| 30 Mesh / 589 $\mu$m | 47.1 % | 38.1 % | 14.2% | 19.7 % |
| 60 Mesh / 246 $\mu$m | 39.3 % | 52.4 % | 76.9 % | 73.1% |
| 100 Mesh / 147 $\mu$m | 1.3 % | 1.8 % | 6.0% | 4.2% |
| < 100 Mesh /< 147 $\mu$m | 0.3 % | 0.5 % | 1.1 % | 0.7 % |

As it can be observed from Table 3, the size of the reduced glass-like polysaccharide particles is directly related to the gap nip settings. Larger gap nip settings will generate a more significant fraction of large particles. The aggressiveness ratio as calculated for the first pair of rollers and the second pair of rollers for example 4 was 1.75; the aggressiveness ratio as calculated for the second pair of rollers and the third pair of rollers for example 4 was 1.6. The aggressiveness ratio as calculated for the first pair of rollers and the second pair of rollers for example 5 was 1.75; the aggressiveness ratio as calculated for the second pair of rollers and the third pair of rollers was 2.0. The third pair of rollers in Example 5 is more aggressive that the third pair of rollers in Example 4.

**Example 6: Corn starch glass-like polysaccharides and absorbent properties**

The gap nip for the first pair of rollers was adjusted to 0.0235 inches (596 $\mu$m); the gap nip for the second pair of rollers was adjusted to 0.0115 inches (292 $\mu$m); and the gap nip for the third pair of rollers was adjusted to 0.0085 inches (216 $\mu$m). The aggressiveness ratio as calculated for the first pair of rollers and the second pair of rollers was 2.04; the aggressiveness ratio as calculated for the second pair of rollers and the third pair of rollers was 1.35.

Glass-like corn starch pellets were fed in the mill. Once ground, the reduced glass-like corn starch particles were sieved for a period of 10 minutes. The obtained particle size distribution is illustrated hereinbelow in Table 4. The absorbent characteristics of the reduced glass-like corn starch particles were as follows: Free Swell Capacity: 7 g/g; Centrifuge Retention Capacity: 4.8 g/g. As can be observed from Table 4, the higher aggressiveness ratio for the first pair of rollers and the second pair of rollers generated a higher content of fine particles.

**Table 4: Particle size distribution of Example 6**

| Mesh size | Micron size | Percentage (w/w) |
|---|---|---|
| > 20 | > 833 $\mu$m | 2.59 % |
| 30 | 589 $\mu$m | 21.5 % |
| 60 | 246 $\mu$m | 68.3 % |
| 100 | 147 $\mu$m | 5.68 % |
| < 100 | < 47 $\mu$m | 2.09 % |

**Claims**

1.  A process for reducing glass-like polysaccharide particles comprising:

    a) providing particles of a glass-like polysaccharide selected from the group consisting of glass-like polysaccharides having a moisture content from 0% to 13% and glassy state glass-like polysaccharides; and
    b) submitting said particles to the size reducing action of at least three pairs of successive rollers generating size-reduced particles.

2.  The process of claim **1,** wherein the moisture content ranges from 7% to 9%.

3.  The process of claim **1,** wherein the size-reduced particles are sieved.

4.  The process of claim **3,** further comprising the step of removing airborne particles in proximity to the rollers.

5.  The process of claim **4,** wherein the airborne particles are removed using a dust cleaner.

6.  The process of claim **1,** wherein the glass-like polysaccharide particles comprise starch.

7.  The process of claim **6,** wherein the starch is selected from the group consisting of corn, waxy corn, wheat, waxy wheat, rice, waxy rice, potato, cassava, waxy maize, sorghum, waxy sorghum, sago, buckwheat, beans, peas, rye, barley, amaranth and mixtures thereof.

8.  The process of claim **1,** wherein each of two successive pairs of rollers has an aggressiveness ratio ranging from 1.0 to 2.0.

9. The process of claim **8,** wherein each of two successive pairs of rollers has an aggressiveness ratio ranging from 1.2 to 1.8.

10. The process of claim **1,** wherein the particles are pellet-shaped.

11. The process of claim **10,** wherein the pellet-shaped particles have a size ranging from 2 mm to 8 mm.

12. The process of claim **1,** wherein the particles are submitted to the size reducing action of at least four pairs of successive rollers.

13. The process of claim **1,** wherein the size reduced particles have a size ranging from 150 $\mu$m to 850 $\mu$m.

14. The process of claim **13,** wherein the size reduced particles have a size distribution comprising:

   a) a particle content having a size smaller than 150 $\mu$m of less than 5%; and
   b) a particle content having a size larger than 850 $\mu$m of less than 5%.


**Patentansprüche**

1. Verfahren zum Reduzieren glasartiger Polysaccharidpartikel, umfassend:

   a) Bereitstellen von Partikeln eines glasartigen Polysaccharids ausgewählt aus der Gruppe bestehend aus glasartigen Polysacchariden, die einen Feuchtigkeitsgehalt von 0% bis 13% und eine glasige Phase glasartiger Polysaccharide haben; und
   b) Unterziehen der Partikel einer die Größe reduzierenden Wirkung von wenigstens drei Paaren von aufeinander folgenden Walzen, die größenreduzierte Partikel erzeugen.

2. Verfahren nach Anspruch 1, wobei der Feuchtigkeitsgehalt von 7% bis 9% beträgt.

3. Verfahren nach Anspruch 1, wobei die größenreduzierten Partikel gesiebt werden.

4. Verfahren nach Anspruch 3, desweiteren umfassend den Schritt des Entfernens von sich in der Luft befindlichen Partikeln in der Umgebung der Walzen.

5. Verfahren nach Anspruch 4, wobei die sich in der Luft befindlichen Partikel mittels eines Entstaubers beseitigt werden.

6. Verfahren nach Anspruch 1, wobei die glasartigen Polysaccharidpartikel Stärke enthalten.

7. Verfahren nach Anspruch 6, wobei die Stärke ausgewählt ist aus der Gruppe bestehend aus Korn, Wachskorn, Weizen, Wachsweizen, Reis, Wachsreis, Kartoffel, Maniok, Wachsmais, Sorghum, Wachssorghum, Sago, Buchweizen, Bohnen, Erbsen, Roggen, Gerste, Amarant und Mischungen daraus.

8. Verfahren nach Anspruch 1, wobei jede von zwei aufeinander folgenden Paaren von Walzen eine Angriffsfähigkeitsrate von 1,0 bis 2,0 aufweist.

9. Verfahren nach Anspruch 8, wobei jede von zwei aufeinander folgenden Paaren von Walzen eine Angriffsfähigkeitsrate von 1,2 bis 1,8 aufweist.

10. Verfahren nach Anspruch 1, wobei die Partikel granulatförmig sind.

11. Verfahren nach Anspruch 10, wobei die granulatförmigen Partikel eine Größe im Bereich von 2 mm bis 8 mm aufweisen.

12. Verfahren nach Anspruch 1, wobei die Partikel einer die Größe reduzierenden Wirkung von mindestens vier Paaren von aufeinander folgenden Walzen unterzogen werden.

13. Verfahren nach Anspruch 1, wobei die größenreduzierten Partikel eine Größe im Bereich von 150 $\mu$m bis 850 $\mu$m

aufweisen.

14. Verfahren nach Anspruch 13, wobei die größenreduzierten Partikel eine Größenverteilung aufweisen, umfassend:

a) einen Partikelanteil mit einer Größe von kleiner als 150 $\mu$m von weniger als 5%; und
b) einen Partikelanteil mit einer Größe von größer als 850 $\mu$m von weniger als 5%.

**Revendications**

1. Procédé de réduction de particules de polysaccharides de type vitreux, comprenant :

a) l'obtention de particules d'un polysaccharide de type vitreux sélectionné dans le groupe constitué des polysaccharides de type vitreux ayant une teneur en humidité de 0 % à 13 % et des polysaccharides de type vitreux à l'état vitreux ; et
b) la soumission desdites particules à l'action de réduction de taille d'au moins trois paires de rouleaux successifs générant des particules de taille réduite.

2. Procédé selon la revendication 1, dans lequel la teneur en humidité est de 7 % à 9 %.

3. Procédé selon la revendication 1, dans lequel les particules de taille réduite sont tamisées.

4. Procédé selon la revendication 3, comprenant en outre l'étape d'élimination des particules en suspension dans l'air à proximité des rouleaux.

5. Procédé selon la revendication 4, dans lequel les particules en suspension dans l'air sont éliminées au moyen d'un dépoussiéreur.

6. Procédé selon la revendication 1, dans lequel les particules de polysaccharides de type vitreux comprennent un amidon.

7. Procédé selon la revendication 6, dans lequel l'amidon est choisi dans le groupe constitué des amidons de maïs, de maïs cireux, de blé, de blé cireux, de riz, de riz cireux, de pomme de terre, de manioc, de maïs cireux, de sorgho, de sorgho cireux, de sagou, de sarrasin, de haricots, de pois, de seigle, d'orge, d'amarante et leurs mélanges.

8. Procédé selon la revendication 1, dans lequel deux paires successives de rouleaux ont chacune un rapport de corrosivité allant de 1,0 à 2,0.

9. Procédé selon la revendication 8, dans lequel deux paires successives de rouleaux ont chacune un rapport de corrosivité allant de 1,2 à 1,8.

10. Procédé selon la revendication 1, dans lequel les particules sont en forme de pastilles.

11. Procédé selon la revendication 10, dans lequel les particules en forme de pastilles ont une taille allant de 2 mm à 8 mm.

12. Procédé selon la revendication 1, dans lequel les particules sont soumises à l'action de réduction de taille d'au moins quatre paires de rouleaux successifs.

13. Procédé selon la revendication 1, dans lequel les particules de taille réduite possèdent une taille allant de 150 $\mu$m à 850 $\mu$m.

14. Procédé selon la revendication 13, dans lequel les particules de taille réduite présentent une répartition granulométrique comprenant :

a) une teneur en particules ayant une taille inférieure à 150 $\mu$m de moins de 5 % ; et
b) une teneur en particules ayant une taille supérieure à 850 $\mu$m de moins de 5 %.

Figure 1

Figure 2

Figure 3

Figure 4

## REFERENCES CITED IN THE DESCRIPTION

### Patent documents cited in the description

- US 3706598 P, Carrell, P. K.
- CA 1319045, Spratt
- US 4232047 P, Sair
- US 3922354 P, Galluzzi
- US 5972395 P, Saleeb
- US P4820534 A
- US P4532145 P
- US 5009900 P, Levine
- US 5958502 P, Fulger
- US 5846580 P, Franke
- US P6582753 A, Willibald-Ettle
- US P6248386 P
- US P5066335 P
- US P5360903 P
- US 5367068 A
- US P6159257 A, Koutlakis
- US 2004157532 A
- US 6726536 P, Drake
- US 2004121707 A
- CA 2308537, Huppé
- CA 2462053, Thibodeau
- CA 2483049, Berrada
- US 2004244652 A, Drake
- US 5300565 P, Berg
- US P453364 P
- FR 415230, Brunner, H.
- US 1396712 P, Johnston, G.

- US 2986348 P, Noll
- US 3895121 P, Huessy, E. G.
- FR 1296235, Sartori, R.
- EP 0949003 A, Livrieri, F.
- US 3933086 P, Standing, C. N.
- US 4220287 P, Boczewski, M. P.
- US 4225093 P, Rusch
- US P4859484 A, Bielskis
- US P5031845 A, Gemsjager, H.
- WO 8903245 A1, Baltensperger
- US 5089282 P, Wellman, W.
- US 5104671 P
- US 5141764 P
- US 5186968 P
- US P5194287 P
- US P5211982 P
- US P6098905 A, Salem
- US P5192028 A, Curran, S. P.
- US P6887509 A, Leusner
- US P5250313 A, Giguere, R. J.
- US 2005153044 A, Hellweg
- WO 05002343 A, Morgan, K. R.
- US 2005160996 A, Weaver, W. R.
- US P4232047 A, Sair
- CA 2519417, Berrada, M.
- CA 2362006, Couture
- CA 2426478, Bergeron, D.

### Non-patent literature cited in the description

- **RICHARD ; PERRY et al.** Perry's Chemical Engineers' Handbook. McGraw-Hill, 1997, vol. 20, 1-56

- Modern Superabsorbent Polymer Technology. Wiley-VCH, 1998